# FASCICULE DE BREVET EUROPEEN

(11) **EP 0 702 643 B1**
(45) Date de publication et mention de la délivrance du brevet: **28.10.1998**
(21) Numéro de dépôt: 95917386.5
(22) Date de dépôt: 13.04.1995
(51) Int. Cl.: B64D 45/02, F16B 35/04

(54) **STRUCTURE ANTI-ETINCELAGE, NOTAMMENT POUR AERONEF**
FUNKENSICHERE STRUKTUR, INSBESONDERE FÜR FLUGZEUGE
SPARKPROOF STRUCTURE

(30) Priorité: 15.04.1994 FR 9404507
(43) Date de publication de la demande: 27.03.1996
(73) Titulaire: AEROSPATIALE SOCIETE NATIONALE INDUSTRIELLE, 75016 Paris (FR)
(72) Inventeur: AVENET, Jean-Pierre, F-75020 Paris (FR); GONDOT, Pascal, F-94190 Villeneuve-Saint-Georges (FR)
(74) Mandataire: Bonnetat, Christian
(86) Numéro de dépôt international: FR9500477
(87) Numéro de publication internationale: WO9528319

(56) Documents cités:
- EP-A- 0 269 458
- EP-A- 0 334 011
- EP-A- 0 425 292
- GB-A- 2 226 801

## Description

La présente invention concerne les structures antiétincelage, notamment pour aéronef.

On connaît déjà des structures comportant :
- deux éléments de matière composite ayant chacun une face extérieure et une face intérieure et disposés de façon que la face intérieure du premier desdits éléments soit au moins partiellement superposée à la face extérieure du second desdits éléments, les parties superposées desdits éléments comportant des paires de trous en regard ;
- des vis à tête fraisée, dont chacune d'elles traverse une paire desdits trous en regard de façon que sa tête vienne se loger dans une fraisure prévue dans la face extérieure dudit premier élément ; et
- des écrous susceptibles de coopérer respectivement avec lesdites vis et de prendre appui sur la face intérieure dudit second élément pour presser la tête fraisée de la vis correspondante dans ladite fraisure.

Lorsqu'une telle structure est soumise à l'action de la foudre, le courant de décharge se propage par lesdites vis vers lesdits premier et second éléments et vers lesdits écrous.

En raison de la densité généralement élevéé dudit courant de décharge et de la résistance au courant importante à l'interface entre d'une part lesdites vis et d'autre part lesdits premier et second éléments, un échauffement important se produit à ladite interface par effet Joule. Cet échauffement peut faire fondre, au moins localement, la matière composite desdits premier et second éléments et créer ainsi des gaz de sublimation au niveau de ladite interface.

De tels gaz sont susceptibles d'engendrer des surpressions pouvant détruire ladite structure.

En outre, ledit échauffement et l'étincelage importants engendrés alors peuvent également être extrêmement dommageables à ladite structure, surtout si celle-ci fait partie d'un réservoir de carburant, en raison des risques d'inflammation dudit carburant qui existent alors.

On notera que les phénomènes physiques décrits précédemment sont plus importants encore entre ledit écrou et ledit second élément.

En effet, une partie du courant de décharge provenant de la vis arrive dans ledit écrou, sans échauffement notable à l'interface entre la vis et l'écrou puisque la résistance y est faible, et est dirigée dans le second élément transversalement à ce dernier. Ce courant dirigé transversalement rencontre une résistance élevée surtout si ledit second élément est constitué d'une structure carbone - carbone pour laquelle la circulation du courant est beaucoup plus facile longitudinalement que transversalement.

Pour évacuer les gaz formés à l'interface entre la vis et lesdits premier et second éléments, le document EP-A-0 425 292 propose de monter l'écrou dans un manche qui comporte une rainure longitudinale pour évacuer les gaz.

Pour le même but, le document GB-2 226 801 propose deux solutions différentes.

Selon une première solution, il est prévu de remplacer l'écrou par un élément femelle présentant une forme complexe et un encombrement important, et comportant au moins une chambre de stockage ouverte vers ledit second élément, ladite chambre de stockage étant destinée à récupérer et à stocker les gaz formés à ladite interface. Bien que, par une telle orientation de l'ouverture permettant l'accès à ladite chambre, ledit élément femelle est en mesure de bien récupérer les gaz formés, cette solution n'est guère intéressante industriellement puisque ledit élément femelle est beaucoup trop complexe pour l'utilisation envisagée, et ceci quel que soit le mode de réalisation propose.

Selon une seconde solution de ce document antérieur, il est prévu de former dans la vis des canaux permettant de faire communiquer certaines zones de l'interface avec l'extérieur de la structure, pour évacuer directement vers l'extérieur les gaz formés à ladite interface. Mais comme une telle solution ne peut être envisagée que localement, il est impossible de récupérer tous les gaz formés à l'interface. C'est bien ce qui est affirmé explicitement dans ledit document précité puisqu'on prévoit, dans un tel cas, des chambres de stockage dans l'écrou pour les gaz n'ayant pu être évacués par le ou les canaux prévus dans la vis. Cette seconde solution n'est donc pas satisfaisante, elle non plus. Le préambule de la revendication 1 est fondé sur ladite seconde solution.

La présente invention a pour objet de remédier à ces inconvénients, de permettre, en n'utilisant que des écrous standard à peine modifiés, de rendre la structure résistante aux coups de foudre, et de trouver en particulier une solution au problème posé par les gaz formés inévitablement, lors d'un foudroiement de la structure, à l'interface entre la vis et lesdits premier et second éléments.

A cette fin, selon l'invention, la structure anti-étincelage, notamment pour aéronef, comportant :
- deux éléments de matière composite ayant chacun une face extérieure et une face intérieure et disposés de façon que la face intérieure du premier desdits éléments soit au moins partiellement superposée à la face extérieure du second desdits éléments, lesdits éléments étant munis de trous en regard ;
- une vis à tête fraisée traversant lesdits trous en regard de façon que sa tête vienne se loger dans une fraisure prévue dans la face extérieure dudit premier élément et qui comporte un tronçon de canal débouchant dans ladite tête fraisée ; et
- un écrou susceptible de coopérer avec ladite vis et de s'appuyer par une face d'appui sur la face intérieure dudit second élément pour presser ladite tête fraisée dans ladite fraisure et pour maintenir ensemble lesdits éléments dans une position de fixation, est remarquable en ce qu'elle comporte un moyen d'évacuation unique selon la partie caractérisante de la revendication 1.

Ainsi, grâce à l'invention, la récupération et l'évacuation des gaz formés à l'interface sont obtenues en utilisant un écrou standard seulement pourvu dudit évidement, et non un élément femelle complexe et volumineux, sans grand intérêt industriel, comme celui proposé dans la solution connue précitée.

De plus, en raison de l'endroit où elle est formée, ladite chambre de stockage permet de récupérer l'essentiel des gaz créés à ladite interface.

On remarquera, par ailleurs, que le fait de pratiquer l'évidement dans la face d'appui de l'écrou empêche une circulation du courant de décharge entre ladite vis et le second élément, par l'intermédiaire de l'écrou, ce qui évite l'apparition des échauffements généralement importants à cet endroit, comme indiqué précédemment, et susceptibles d'être extrêmement dommageables.

En particulier, pour simplifier sa réalisation, ledit évidement peut présenter une forme annulaire coaxiale audit écrou.

De façon avantageuse, ledit canal d'évacuation comporte :
- une première partie de canal formée longitudinalement au fût de ladite vis entre la tête de ladite vis et un point de ladite vis situé au moins au niveau de ladite chambre de stockage vers l'intérieur de la structure anti-étincelage en position de fixation ; et
- au moins une seconde partie de canal formée transversalement audit fût de la vis entre ladite première partie de canal et un point de la face externe dudit fût situé dans ladite chambre de stockage en position de fixation.

Ainsi, ledit canal d'évacuation peut être réalisé facilement a partir de deux perçages pratiqués dans ladite vis, un perçage longitudinal et un perçage transversal.

De préférence, lesdites première et seconde parties de canal sont de forme cylindrique et, de plus, ladite première partie de canal est formée de façon coaxiale audit fût de la vis.

La présente invention présente un avantage tout particulier lorsque ledit écrou est un écrou borgne.

En effet, dans ce cas, selon un mode de réalisation préférentiel de l'invention, ledit écrou borgne comporte, de façon avantageuse, un évidement supplémentaire formant dans la position de fixation une chambre de stockage supplémentaire avec la face externe de l'extrémité de la vis opposée à la tête de la vis.

Ainsi, on obtient une seconde chambre de stockage pour les gaz qui n'ont éventuellement pas pu être récupérés par la première chambre de stockage et/ou les gaz qui se sont éventuellement échappés de ladite première chambre de stockage par la liaison à filetage entre l'écrou et la vis, ce qui empêche ces gaz d'accéder à l'intérieur de la structure anti-étincelage.

Pour simplifier la réalisation de ladite chambre de stockage supplémentaire, ledit évidement supplémentaire correspond avantageusement au prolongement du trou taraudé de l'écrou borgne destiné à recevoir la vis.

De façon avantageuse, pour évacuer vers l'extérieur de la structure les gaz stockés dans ladite chambre de stockage supplémentaire, ladite vis comporte une troisième partie de canal établissant une voie de communication entre ledit canal d'évacuation et la face externe de l'extrémité de la vis opposée à la tête de la vis.

De préférence, ladite troisième partie de canal correspond au prolongement de ladite première partie de canal, ce qui facilite la réalisation dudit canal en permettant de pratiquer un perçage longitudinal traversant dans ladite vis.

Les figures du dessin annexé feront bien comprendre comment l'invention peut être réalisée. Sur ces figures, des références identiques désignent des éléments semblables.

La figure 1 est une coupe transversale, partielle et schématique, d'une structure anti-étincelage conforme à l'invention, dans un premier mode de réalisation.

La figure 2 est une coupe transversale, partielle et schématique, d'une structure anti-étincelage conforme à l'invention, dans un second mode de réalisation.

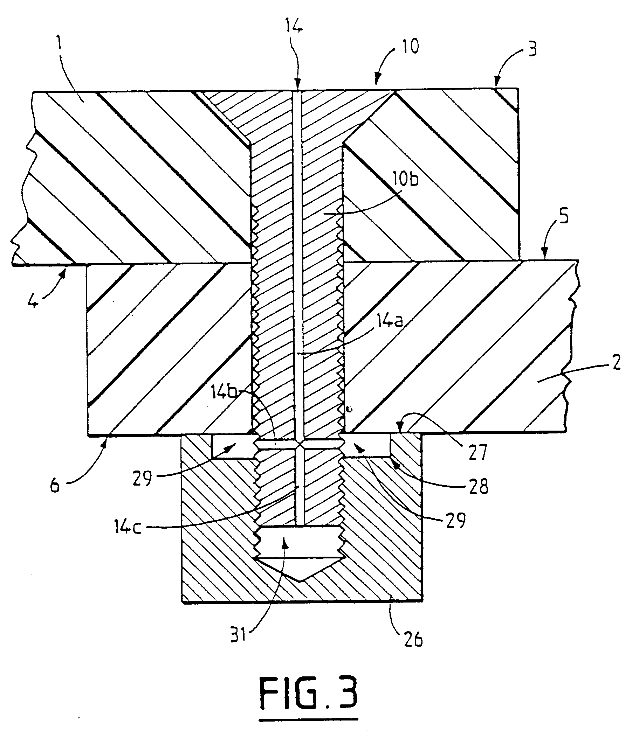

La figure 3 est une coupe transversale, partielle et schématique, d'une structure anti-étincelage conforme à l'invention, dans un troisième mode de réalisation.

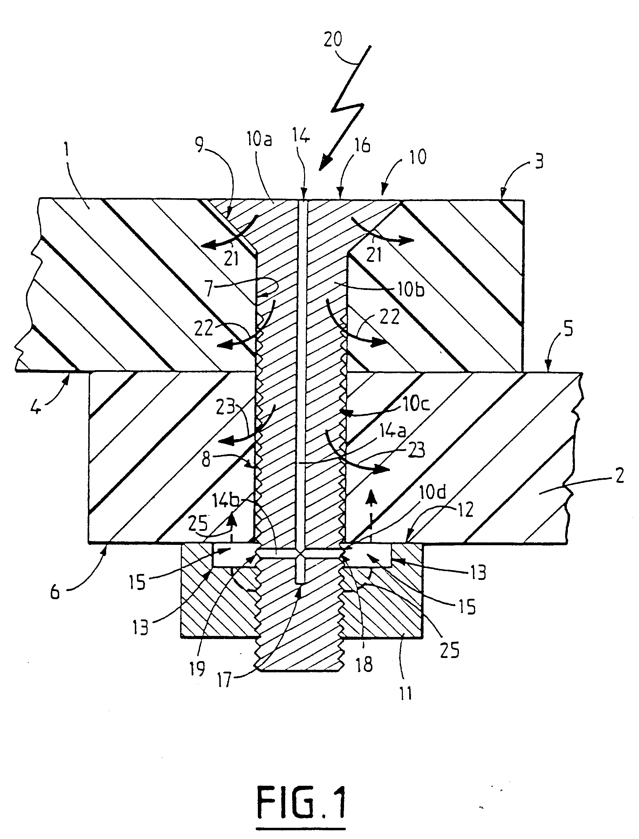

La structure anti-étincelage conforme à l'invention, réalisée selon un premier mode de réalisation et représentée sur la figure 1, comporte deux éléments 1 et 2 de matière composite, par exemple à base de fibres de carbone. Ladite structure anti-étincelage peut constituer par exemple une partie d'un réservoir de carburant, en particulier d'un aéronef.

L'élément 1 comporte une face extérieure 3 et une face intérieure 4, tandis que l'élément 2 comporte une face extérieure 5 et une face intérieure 6. Lesdits éléments 1 et 2 sont superposés de manière que la face intérieure 4 de l'élément 1 recouvre au moins partiellement la face extérieure 5 de l'élément 2. Dans la zone de recouvrement, lesdits éléments 1 et 2 sont respectivement pourvus de trous 7 et 8, en regard l'un de l'autre dans la position de recouvrement de la figure 1.

Par ailleurs, du côté de la face extérieure 3 de l'élément 1, le trou 7 comporte une fraisure 9.

Dans les trous 7 et 8 en regard est introduite une vis métallique 10 comportant une tête fraisée 10a et un fût 10b muni, sur une grande partie et à l'extrémité opposée à ladite tête fraisée 10a, d'un filetage 10c. La vis 10 est telle que sa tête fraisée 10a s'adapte exactement à la fraisure 9 et que le fût 10b s'applique contre les parois des trous 7 et 8.

Avec le filetage 10c de la vis 10 coopère un écrou 11, de type pratiquement standard, susceptible de prendre appui par une face d'appui 12 sur la face intérieure 6 de l'élément 2 pour presser la tête fraisée 10a de la vis 10 dans la fraisure 9 et pour maintenir ensemble lesdits éléments 1 et 2 dans une position de fixation, tel que représenté sur la figure 1.

Conformément à la présente invention :
- ledit écrou 11 comporte un évidement 13, pratiqué par exemple par usinage dans ladite face d'appui 12, de façon coaxiale audit écrou 11 de manière à former avec la face intérieure 6 de l'élément 2 et la face externe 10d du fût 10b de la vis 10, dans ladite position de fixation, une chambre de stockage 15 de forme annulaire ; et
- ladite vis 10 est munie d'un canal 14 établissant, dans ladite position de fixation représentée, une voie de communication entre ladite chambre de stockage 15 et l'extérieur de la structure anti-étincelage.

Ledit canal 14 comporte :
- une première partie de canal 14a de forme cylindrique, formée longitudinalement dans ledit fût 10b, au centre de celui-ci, entre la face externe 16 de la tête 10a de ladite vis 10 et un point 17 situé au moins au niveau de ladite chambre de stockage 15 vers l'intérieur de la structure anti-étincelage en position de fixation ; et
- une seconde partie de canal 14b également de forme cylindrique, de même diamètre que ladite première partie de canal 14a, formée de façon à traverser transversalement ledit fût 10b de manière que les ouvertures opposées 18 et 19 ainsi créées dans la face externe 10d du fût 10b débouchent, dans la position de fixation, dans ladite chambre de stockage 15.

Ainsi, lorsque la foudre, symbolisée par une flèche 20, atteint la tête 10a de la vis 10, le courant de décharge passe d'une part dans l'élément 1, comme illustré par des flèches 21 et 22, et d'autre part dans l'élément 2, comme illustré par des flèches 23. En raison de la résistance élevée existant à l'interface entre d'une part ladite vis 10 et d'autre part lesdits éléments 1 et 2, des échauffements élevés sont susceptibles d'être engendrés au niveau de ladite interface, lorsque le courant de décharge présente une densité élevée.

Ces échauffements peuvent créer des fusions au moins locales de la matière composite formant lesdits éléments 1 et 2 et engendrer ainsi des gaz à pressions élevées. Ces gaz qui circulent le long ladite interface sont récupérés par la chambre de stockage 15 accédant directement à ladite interface au niveau de la surface inférieure 6 de l'élément 2. La chambre de stockage 15 conforme à l'invention peut ainsi récupérer tous les gaz circulant le long de ladite interface.

Les gaz ainsi stockés dans ladite chambre de stockage 15 sont évacués vers l'extérieur de la structure anti-étincelage à travers le canal 14, ce qui, d'une part, permet d'utiliser une chambre de stockage à volume réduit pouvant être formée dans un écrou standard, au contraire de la solution préconisée par le document précité GB-2 226 801, pour laquelle l'écrou était remplacé par un élément femelle d'une grande complexité, non intéressant industriellement, et, d'autre part, évite la génération dans ladite chambre de stockage 15 d'échauffements trop élevés et surtout de surpressions qui, s'ils existaient, pourraient arracher l'écrou 11 de la vis 10.

On notera en outre que l'évidement 13 dans l'écrou 11 empêche la circulation de courant électrique de décharge entre la vis 10 et l'élément 2, par l'intermédiaire de l'écrou 11, dans le sens indiqué par des flèches 25 tracées en traits interrompus.

S'ils existaient, de tels courants électriques circulant transversalement à l'élément 2 provoqueraient des échauffements importants dans ledit élément 2, en raison de la structure dudit élément 2 réalisée en matière composite à fibres de carbone, une telle structure présentant en effet une résistance élevée au courant dans le sens transversal.

Ainsi, grâce à l'invention, de tels courants électriques ne peuvent pas exister, ce qui est très avantageux et contribue donc également à limiter l'échauffement lors d'un foudroiement de la structure anti-étincelage.

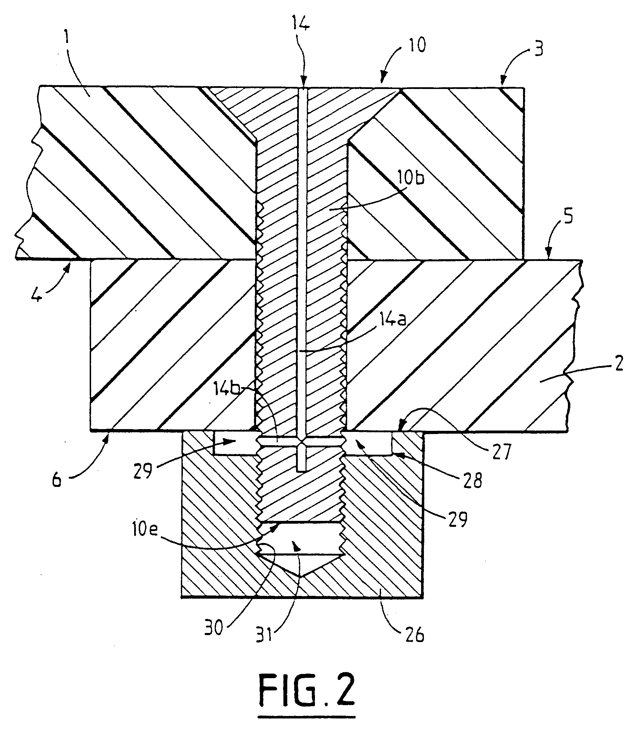

Selon un second mode de réalisation de l'invention, tel que représenté sur la figure 2, la structure antiétincelage comporte un écrou borgne 26 utilisé de la même façon que l'écrou 11 de la figure 1.

Ledit écrou 26 est muni, dans une face d'appui 27 destinée à venir au contact de la face intérieure 6 de l'élément 2, d'un évidement 28 réalisé de façon identique à l'évidement 13 de l'écrou 11 et formant en position de fixation une chambre de stockage 29 identique à la chambre de stockage 15 de la figure 1.

Le trou taraudé 30 dudit écrou 26 destiné à coopérer avec la vis 10 est réalisé de manière que, dans la position de fixation représentée sur la figure 2, une chambre de stockage supplémentaire 31 soit formée par le fond dudit trou taraudé 30 et l'extrémité 10e de la vis 10 opposée à la tête 10a.

Ladite chambre de stockage 31 permet, en particulier, de récupérer les gaz qui peuvent éventuellement s'échapper de la chambre de stockage 29 le long de l'interface entre le filetage 10c de la vis 10 et le trou taraudé coopérant 30.

Afin de pouvoir évacuer vers l'extérieur de la structure anti-étincelage, les gaz stockés dans ladite chambre de stockage 31, une troisième partie de canal 14c permettant de relier ladite chambre 31 audit canal 14 est prévue dans la vis 10.

Ladite troisième partie de canal 14c correspond à un prolongement de ladite première partie de canal 14a de sorte que la vis 10 est ainsi munie d'un perçage longitudinal traversant, ce qui facilite la réalisation dudit canal 14.

## Revendications

1. Structure anti-étincelage, notamment pour aéronef, comportant :
- deux éléments (1,2) de matière composite ayant chacun une face extérieure (3, 5) et une face intérieure (4, 6) et disposés de façon que la face intérieure (4) du premier desdits éléments (1) soit au moins partiellement superposée à la face extérieure (5) du second desdits éléments (2), lesdits éléments (1, 2) étant munis de trous (7, 8) en regard :
- une vis (10) à tête fraisée (10a) qui traverse lesdits trous (7, 8) en regard de façon que sa tête (10a) vienne se loger dans une fraisure (9) prévue dans la face extérieure (3) dudit premier élément (1) et qui comporte un tronçon de canal débouchant dans ladite tête fraisée (10a) ; et
- un écrou (11, 26) susceptible de coopérer avec ladite vis (10) et de s'appuyer par une face d'appui (12, 27) sur la face intérieure (6) dudit second élément (2) pour presser ladite tête fraisée (10a) dans ladite fraisure (9) et pour maintenir ensemble lesdits éléments (1, 2) dans une position de fixation,
caractérisée en ce qu'elle comporte un moyen d'évacuation unique (14, 15, 29) pour évacuer tous les gaz formés à l'interface entre d'une part ladite vis (10) et d'autre part lesdits premier et second éléments (1, 2) lors d'un foudroiement de ladite structure anti-étincelage, ledit moyen d'évacuation (14, 15, 29) comprenant :
- d'une part, au niveau de ladite interface une chambre unique (15, 29), située dans ladite position de fixation à la zone d'accumulation des gaz, à l'extrémité de ladite interface au niveau de la face intérieure (6) dudit second élément (2), et formée par un évidement (13,28) pratiqué dans la face d'appui (12, 27) dudit écrou (11, 26) ; et
- d'autre part, un canal d'évacuation (14) comprenant ledit tronçon de canal et établissant, dans ladite position de fixation, une voie de communication entre ladite chambre (15, 29) et l'extérieur de ladite structure anti-étincelage.

2. Structure anti-étincelage selon la revendication 1,
caractérisée en ce que ledit évidement (13, 28) présente une forme annulaire coaxiale audit écrou (11, 26).

3. Structure anti-étincelage selon l'une des revendications 1 ou 2,
caractérisée en ce que ledit canal d'évacuation (14) comporte :
- une première partie de canal (14a) formée longitudinalement au fût (10b) de ladite vis (10) entre la tête (10a) de ladite vis (10) et un point (17) de ladite vis (10) situé au moins au niveau de ladite chambre (15, 29) vers l'intérieur de la structure anti-étincelage en position de fixation ; et
- au moins une seconde partie de canal (14b) formée transversalement audit fût (10b) de la vis (10) entre ladite première partie de canal (14a) et un point (18, 19) de la face externe (10d) dudit fût (10b) situé dans ladite chambre (15, 29) en position de fixation.

4. Structure anti-étincelage selon la revendication 3,
caractérisée en ce que lesdites première et seconde parties de canal (14a, 14b) sont de forme cylindrique.

5. Structure anti-étincelage selon la revendication 4,
caractérisée en ce que ladite première partie de canal (14a) est formée de façon coaxiale audit fût (10b) de la vis (10).

6. Structure anti-étincelage selon l'une quelconque des revendications 1 à 5, ledit écrou étant constitué d'un écrou borgne (26),
caractérisée en ce que ledit écrou borgne (26) comporte un évidement supplémentaire (30) formant, dans la position de fixation, une chambre de stockage supplémentaire (31) avec la face externe (10e) de l'extrémité de la vis opposée à la tête (10a) de la vis (10).

7. Structure anti-étincelage selon la revendication 6,
caractérisée en ce que ledit évidement supplémentaire correspond au prolongement du trou taraudé (30) de l'écrou (26) destiné à recevoir la vis (10).

8. Structure anti-étincelage selon l'une des revendications 6 ou 7,
caractérisée en ce que ladite vis (10) comporte une troisième partie de canal (14c) établissant une voie de communication entre ledit canal d'évacuation (14) et la face externe (10e) de l'extrémité de la vis opposée à la tête (10a) de la vis (10).

9. Structure anti-étincelage selon la revendication 8,
caractérisée en ce que ladite troisième partie de canal (14c) correspond au prolongement de ladite première partie de canal (14a).

## Claims

1. Anti-spark structure, in particular for aircraft, including:
- two elements (1, 2) of composite material each one having an outer face (3, 5) and an inner face (4, 6) and which two elements are located such that the inner face (4) of the first of the said elements (1) is at least partially superimposed on the outer face (5) of the second of the said elements (2), the said elements (1, 2) being equipped with opposing holes (7, 8);
- a screw (10) with countersunk head (10a) which passes through the said opposing holes (7, 8) such that its head (10a) becomes housed in a countersink (9) provided in the outer face (3) of the said first element (1) and which includes a passage section opening into the said countersunk head (10a); and
- a nut (11, 26) capable of interacting with the said screw (10) and of bearing via a bearing face (12, 27) on the inner face (6) of the said second element (2) in order to press the said countersunk head (10a) into the said countersink (9) and in order to hold the said elements (1, 2) together in a fastened position,
characterized in that it includes a single removal means (14, 15, 29) for removing all the gases formed at the interface between on the one hand the said screw (10) and on the other hand the said first and second elements (1, 2) when the said anti-spark structure is struck by lightning, the said removal means (14, 15, 29) comprising:
- on the one hand, at the said interface, a single chamber (15, 29), situated, in the said position in which it is fastened to the gas accumulation region, at the end of the said interface at the inner face (6) of the said second element (2) and formed by a recess (13, 28) made in the bearing face (12, 27) of the said nut (11, 26); and
- on the other hand, a removal passage (14) comprising the said passage section and establishing, in the said fastened position, a communication path between the said chamber (15, 29) and the outside of the said anti-spark structure.

2. Anti-spark structure according to Claim 1, characterized in that the said recess (13, 28) exhibits an annular shape coaxial with the said nut (11, 26).

3. Anti-spark structure according to one of Claims 1 and 2, characterized in that the said removal passage (14) includes:
- a first passage part (14a) formed longitudinally on the shank (10b) of the said screw (10) between the head (10a) of the said screw (10) and a point (17) on the said screw (10) which is situated at least level with the said chamber (15, 29) toward the inside of the anti-spark structure in the fastened position; and
- at least one second passage part (14b) formed transversely to the said shank (10b) of the screw (10) between the said first passage part (14a) and a point (18, 19) on the external face (10d) of the said shank (10b) situated in the said chamber (15, 29) in the fastened position.

4. Anti-spark structure according to Claim 3, characterized in that the said first and second passage parts (14a, 14b) are of cylindrical shape.

5. Anti-spark structure according to Claim 4, characterized in that the said first passage part (14a) is formed coaxially with the said shank (10b) of the screw (10).

6. Anti-spark structure according to any one of Claims 1 to 5, the said nut consisting of a cap nut (26), characterized in that the said cap nut (26) includes an additional recess (30) which, in the fastened position, with the external face (10e) of the opposite end of the screw (10) to the head (10a) forms an additional storage chamber (31).

7. Anti-spark structure according to Claim 6, characterized in that the said additional recess corresponds to the extension of the tapped hole (30) of the nut (26) intended to accommodate the screw (10).

8. Anti-spark structure according to one of Claims 6 and 7, characterized in that the said screw (10) includes a third passage part (14c) establishing a communication path between the said removal passage (14) and the external face (10e) of the opposite end of the screw to the head (10a) of the screw (10).

9. Anti-spark structure according to Claim 8, characterized in that the said third passage part (14c) corresponds to the extension of the said first passage part (14a).

## Patentansprüche

1. Funkensichere Struktur, insbesondere für Flugzeuge, mit:
- zwei Teilen (1, 2) aus Verbundwerkstoff, die jeweils eine Außenfläche (3, 5) und eine Innenflache (4, 6) haben und so angeordnet sind, daß die Innenfläche (4) des ersten Teils (1) mindestens teilweise die Außenfläche (5) des zweiten Teils (2) überlagert, wobei die Teile (1, 2) mit einander gegenüberliegenden Bohrungen (7, 8) versehen sind;
- einer Schraube (10) mit Senkkopf (10a), die durch die einander gegenüberliegenden Bohrungen (7, 8) verläuft, so daß ihr Kopf (10a) in einer Ansenkung (9) in der Außenfläche (3) des ersten Teils (1) lagert, und die einen in den Senkkopf (10a) mündenden Kanalabschnitt hat; und
- einer Mutter (11, 26), die mit der Schraube (10) zusammenwirken und sich mit einer Anlagefläche (12, 27) an die Innenfläche (6) des zweiten Elements (2) anlegen kann, um den Senkkopf (10a) in die Ansenkung (9) zu drücken und die Teile (1, 2) in einer Befestigungsstellung zusammenzuhalten,
dadurch gekennzeichnet, daß sie ein einziges Ableitungsmittel (14, 15, 29) hat, um alle an der Grenzfläche zwischen der Schraube (10) und dem ersten und zweiten Teil (1, 2) bei einem Blitzeinschlag in die funkensichere Struktur gebildeten Gase abzuleiten, wobei das Ableitungsmittel (14, 15, 29) umfaßt:
- einerseits im Grenzflächenbereich eine einzige Kammer (15, 29), die in der Befestigungsstellung im Ansammlungsbereich der Gase am Ende der Grenzfläche im Bereich der Innenfläche (6) des zweiten Teils (2) gelegen ist und aus einer Aussparung (13, 28) in der Anlagefläche (12, 27) der Mutter (11, 26) besteht; und
- andererseits einen Ableitungskanal (14) mit dem Kanalabschnitt, der in der Befestigungsstellung einen Verbindungsweg zwischen der Kammer (15, 29) und der Außenumgebung der funkensicheren Struktur herstellt.

2. Funkensichere Struktur nach Anspruch 1,
dadurch gekennzeichnet, daß die Aussparung (13, 28) eine Ringform koaxial zur Mutter (11, 26) hat.

3. Funkensichere Struktur nach einem der Ansprüche 1 oder 2,
dadurch gekennzeichnet, daß der Ableitungskanal (14) umfaßt:
- einen ersten Kanalabschnitt (14a), der längs zum Schaft (10b) der Schraube (10) zwischen dem Kopf (10a) der Schraube (10) und einer Stelle (17) der Schraube (10) ausgebildet ist, die in Befestigungsstellung zumindest im Bereich der Kammer (15, 29) innerhalb der funkensicheren Struktur liegt; und
- mindestens einen zweiten Kanalabschnitt (14b), der quer zum Schaft (10b) der Schraube (10) zwischen dem ersten Kanalabschnitt (14a) und einer Stelle (18, 19) der Außenfläche (10d) des Schafts (10b) ausgebildet ist, die in der Befestigungsstellung in der Kammer (15, 29) gelegen ist.

4. Funkensichere Struktur nach Anspruch 3,
dadurch gekennzeichnet, daß der erste und zweite Kanalabschnitt (14a, 14b) von zylindrischer Form sind.

5. Funkensichere Struktur nach Anspruch 4,
dadurch gekennzeichnet, daß der erste Kanalabschnitt (14a) koaxial zum Schaft (10b) der Schraube (10) ausgebildet ist.

6. Funkensichere Struktur nach einem der Ansprüche 1 bis 5, wobei die Mutter aus einer Hutmutter (26) besteht,
dadurch gekennzeichnet, daß die Hutmutter (26) eine zusätzliche Aussparung (30) hat, die in der Befestigungsstellung zusammen mit der Außenfläche (10e) des dem Kopf (10a) der Schraube (10) entgegengesetzten Schraubenendes eine zusätzliche Speicherkammer (31) bildet.

7. Funkensichere Struktur nach Anspruch 6,
dadurch gekennzeichnet, daß die zusätzliche Aussparung der Verlängerung der Gewindebohrung (30) der Mutter (26) zur Aufnahme der Schraube (10) entspricht.

8. Funkensichere Struktur nach einem der Ansprüche 6 oder 7,
dadurch gekennzeichnet, daß die Schraube (10) einen dritten Kanalabschnitt (14c) hat, der einen Verbindungsweg zwischen dem Ableitungskanal (14) und der Außenfläche (10e) des dem Kopf (10a) der Schraube (10) entgegengesetzten Schraubenendes herstellt.

9. Funkensichere Struktur nach Anspruch 8,
dadurch gekennzeichnet, daß der dritte Kanalabschnitt (14c) der Verlängerung des ersten Kanalabschnitts (14a) entspricht.
